# EUROPÄISCHE PATENTSCHRIFT

(11) **EP 2 898 978 B1**
(45) Veröffentlichungstag und Bekanntmachung des Hinweises auf die Patenterteilung: **17.11.2021**
(21) Anmeldenummer: 15155580.2
(22) Anmeldetag: 06.05.2010
(51) Int. Cl.: B23K 9/32

(54) **Steckelement für ein Anschlusssystem eines Schweißbrenners**
Plug element for a connection system of a welding torch
Élément enfichable pour un système de raccordement d'un chalumeau

(30) Priorität: 06.05.2009 AT 6902009
(43) Veröffentlichungstag der Anmeldung: 29.07.2015
(62) Teilanmeldung aus: 10722910.6
(73) Patentinhaber: FRONIUS INTERNATIONAL GmbH, 4643 Pettenbach (AT)
(72) Erfinder: Anzengruber, Thomas, 4040 Linz (AT); Brunmayr, Wolfgang, 4600 Wels (AT); Füreder, Christoph, 4623 Gunskirchen (AT); Hiesmayr, Thomas, 4522 Sierning (AT); Kronlachner, Rainer, 4714 Meggenhofen (AT); Lauber, Anton, 4616 Weisskirchen (AT); Pflügl, Karl-Heinz, 4694 Ohlsdorf (AT); Rola, Maximilian, 4552 Wartberg an der Krems (AT)
(74) Vertreter: Burger, Hannes

(56) Entgegenhaltungen:
- WO-A1-2007/031806
- DE-B- 1 219 144
- DE-B3-102004 021 937
- JP-U- S55 108 684
- JP-Y2- S5 838 538
- US-A- 2 819 384
- US-A1- 2002 162 826
- US-B1- 7 274 001

## Beschreibung

Die Erfindung betrifft ein Steckelement eines Anschlusssystems für einen Schweißbrenner gemäß dem Oberbegriff des Anspruchs 1 (siehe z.B. US 7 274 001 B1), welcher über zumindest ein Schlauchpaket mit dem Anschlusssystem verbunden ist, wobei über das Schlauchpaket ein von einer auf einer Motorplatte angeordneten Vorschubeinheit geförderter Schweißdraht und weitere Medien zum Schweißbrenner geführt sind.

Aus der CH 670 210 A5 ist bekannt, dass das Schlauchpaket eines Schweißbrenners mit einem Stecker versehen ist, welcher an einer Kupplung bzw. einem so genannten Zentralanschluss am Schweißgerät angeschlossen wird. Mit einem derartigen Anschlusssystem werden der Schweißstrom, der Schweißdraht, ein Gas und Steuerleitungen und weitere Medien über das Schlauchpaket zum Schweißbrenner geführt. Dazu sind entsprechende Anschlüsse in der Kupplung und im Stecker vorgesehen. Ähnliche Kupplungen sind auch aus der WO 2007/146963 A2, der CH 681 213 A5 oder der DE 93 19 418 U1 bekannt.

Nachteilig ist hierbei, dass der Stecker mit einer Schraubverbindung an der Kupplung befestigt wird, wodurch ein erhöhter Platzbedarf für den Stecker erforderlich ist. Ebenso muss das Gewicht des Schlauchpakets durch diese Schraubverbindung getragen werden. Des Weiteren ist auch von Nachteil, dass die Stromübertragung in der Kupplung erfolgt, sodass die Kupplung hauptsächlich aus einem elektrisch leitfähigen Material gebildet werden muss. Zusätzlich erfolgt dabei die Stromübertragung meist durch Schrauben, Federn oder einer Federpressung, wodurch kein optimaler Stromübergang gewährleistet ist. Demzufolge ist es erforderlich, die Kupplung zu isolieren, um einen Stromübergang auf das Gehäuse - beispielsweise eines Schweißgerätes - zu verhindern. Dadurch wird entsprechend der konstruktive Aufwand für die Kupplung erhöht und der Platzbedarf gesteigert.

Ebenso ist hierbei nachteilig, dass die Kupplung am Gehäuse befestigt wird, sodass auch die Kupplung einen erhöhten Platzbedarf verursacht. Hauptsächlich ist dies darauf zurückzuführen, dass die Kupplung einen Bolzen des Steckers vollständig aufnehmen muss, sodass ein Stromübergang gewährleistet ist. Zusätzlich wird der Platzbedarf auch noch dadurch erhöht, dass eine Führung für den Schweißdraht zwischen einer Motorplatte und der Kupplung im Gehäuse erforderlich ist.

Somit ist bei derartigen Anschlusssystemen nachteilig, dass die Flexibilität durch den erhöhten Platzbedarf eingeschränkt wird. So ist auch bei Zwischenantrieben bei längeren Schlauchpaketen der erhöhte Platzbedarf erforderlich. Zusätzlich bewirkt der erhöhte Platzbedarf auch eine Gewichtserhöhung. Dies ist bei automatisierten Anlagen von Bedeutung, da beispielsweise die Bewegungsfreiheit und Leichtgängigkeit eines Roboters eingeschränkt wird. Auch wird bei automatisierten Anlagen die Verlegung des Schlauchpakets aufgrund des erhöhten Platzbedarfs des Steckers erschwert, wenn das Schlauchpaket zumindest teilweise in den Roboterarmen verlegt wird.

Auch ist von Nachteil, dass eine Einlaufdüse für den Schweißdraht nicht im Anschlusssystem integriert ist. Das heißt, dass die Einlaufdüse beispielsweise ein Teil der Führung, welche sich zwischen der Motorplatte und der Kupplung befindet, ist. Daher ist ein aufwendiger Wechsel der Einlaufdüse erforderlich, da im Wesentlichen die Führung ausgebaut werden muss. Ein Wechsel ist erforderlich, wenn ein anderer Durchmesser für den Schweißdraht verwendet wird.

Die Aufgabe der Erfindung liegt darin, ein verbessertes Steckelement für ein Anschlusssystem eines Schweißbrenners zu schaffen.

Ein Steckelement für ein Anschlusssystem eines Schweißbrenners gemäß der Erfindung ist im Anspruch 1 definiert.

Auf diese Weise kann ein Teil eines Hebels eines Verriegelungssystems in der Nut des Bolzens einrasten und diesen zusätzlich sichern. Vorzugsweise kann der Bolzen zum einen in einer Durchführung einer Stromkupplung eingeklemmt und andererseits auch über die genannte Nut fixiert werden, sodass im Wesentlichen eine doppelte Sicherung gegen eine Änderung der Position des Steckelements gegeben ist. Entsprechend erfolgen dabei die Klemmung und die Sicherung über die Nut gemeinsam mit einem Hebel.

Von Vorteil ist es also, wenn die Stromkupplung mit einer Durchführung und einem Verriegelungssystem für einen Bolzen versehen ist, wobei die Durchführung als Anschluss zur Übertragung des Schweißstroms auf den Bolzen ausgebildet ist.

Vorteilhaft ist hierbei, dass die Führung des Bolzens und die Klemmung mit konstanter Kraft zur Stromübertragung, einen Ausgleich von Fertigungstoleranzen sowie einen raschen Brennerwechsel (beispielsweise bei einem Schichtbetrieb) ermöglichen. Ebenso ist vorteilhaft, dass der Hebel als Kontrolle der richtigen Verriegelung dient, indem dieser im Wesentlichen über dessen Totpunkt gekippt wird. Zusätzlich wird das Überwinden des Totpunkts durch das Einrasten des Hebels in der Nut im Bolzen definiert.

Die vorliegende Erfindung wird anhand der beigefügten, schematischen Zeichnungen näher erläutert, wobei die in der gesamten Beschreibung enthaltenen Offenbarungen sinngemäß auf gleiche Teile mit gleichen Bezugszeichen übertragen werden können. Weiters können auch Einzelmerkmale aus dem gezeigten Ausführungsbeispiel bzw. aus den gezeigten Ausführungsbeispielen für sich eigenständige, erfindungsgemäße Lösungen darstellen.

Darin zeigen:
- Fig. 1: eine schematische Darstellung einer Schweißmaschine bzw. eines Schweißgerätes;
- Fig. 2: eine schematische, dreidimensionale Darstellung eines Anschlusssystems, nicht verbunden;
- Fig. 3: eine schematische, dreidimensionale Schnittdarstellung eines Anschlusssystems, nicht verbunden;
- Fig. 4: eine schematische, dreidimensionale Schnittdarstellung eines Anschlusssystems, verbunden;
- Fig. 5: eine schematische, dreidimensionale Darstellung der Motorplatte des Anschlusssystems;
- Fig. 6: eine schematische, dreidimensionale Darstellung der Rückansicht der Kupplung des Anschlusssystems;
- Fig. 7: eine schematische, dreidimensionale Darstellung der Vorderansicht der Kupplung des Anschlusssystems;
- Fig. 8: eine schematische, dreidimensionale Darstellung der Stromkupplung des Anschlusssystems;
- Fig. 9: eine schematische, dreidimensionale Schnittdarstellung der Stromkupplung des Anschlusssystems;
- Fig. 10: eine schematische, dreidimensionale Darstellung der mit einem Bolzen des Steckelements verbundenen Stromkupplung des Anschlusssystems;
- Fig. 11: eine schematische Darstellung der Draufsicht des Steckelements des Anschlusssystems.

Einführend wird festgehalten, dass gleiche Teile des Ausführungsbeispiels mit gleichen Bezugszeichen versehen werden.

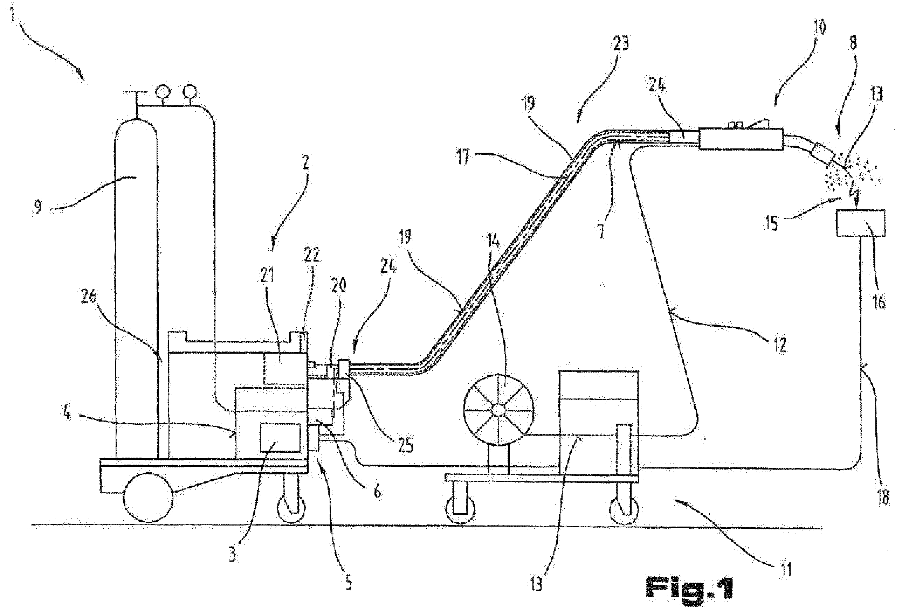

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO2, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten bzw. Anschlüssen des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 - anstelle der Anschlussbuchsen bzw. Steckverbindungen - eingesetzt werden kann. Auf diese Art und Weise wird beispielsweise mit der Kupplungsvorrichtung 24 ein Anschlusssystem 27 für den Schweißbrenner 10 gebildet.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

Wie bereits angesprochen, wird der Schweißbrenner 10 bei einem MIG/MAG - Schweißprozess mit unterschiedlichen Medien (wie Gas und Schweißstrom) versorgt und insbesondere ein Schweißdraht 13 zum Schweißbrenner 10 geführt. Dieser Schweißdraht 13 befindet sich entweder im Drahtvorschubgerät 11 oder im Schweißgerät 1 auf der Vorratstrommel 14, sodass dieser von einer auf einer Motorplatte 28 angeordneten Vorschubeinheit 29 gefördert werden kann. Das heißt, dass der Schweißdraht 13 von der Vorratstrommel 14, über die Motorplatte 28, das Anschlusssystem 27 und das Schlauchpaket 23 zum Schweißbrenner 10 gefördert ist.

In dem Beispiel ist nun vorgesehen, dass ein Anschlusssystem 27 für den Schweißbrenner 10 eine Anschlussvorrichtung 30 umfasst, welche durch eine Stirnwand 38 und eine Trennwand 39 der Motorplatte 28 gebildet ist. Ebenso sind die Anschlüsse des Anschlusssystems 27 auf unterschiedliche Ebenen (31, 32, 33) aufgeteilt.

Im Folgenden wird nun das Anschlusssystem 27 anhand eines Beispiels beschrieben. Dabei wird das Anschlusssystem 27 durch die Kupplungsvorrichtung 24 und einem Steckelement 34 gebildet, wobei die Kupplungsvorrichtung 24 die Anschlussvorrichtung 30, eine Kupplung 35 und eine Stromkupplung 36 umfasst. Das Steckelement 34 ist dabei an einem Ende des Schlauchpakets 23 befestigt, wobei am anderen Ende der Schweißbrenner 10 befestigt ist. Dementsprechend wird also das Steckelement 34 (im Folgenden auch Stecker 34 genannt) beim Verbinden des Anschlusssystems 27 mit der Kupplung 35, der Anschlussvorrichtung 30 und der Stromkupplung 36 verbunden.

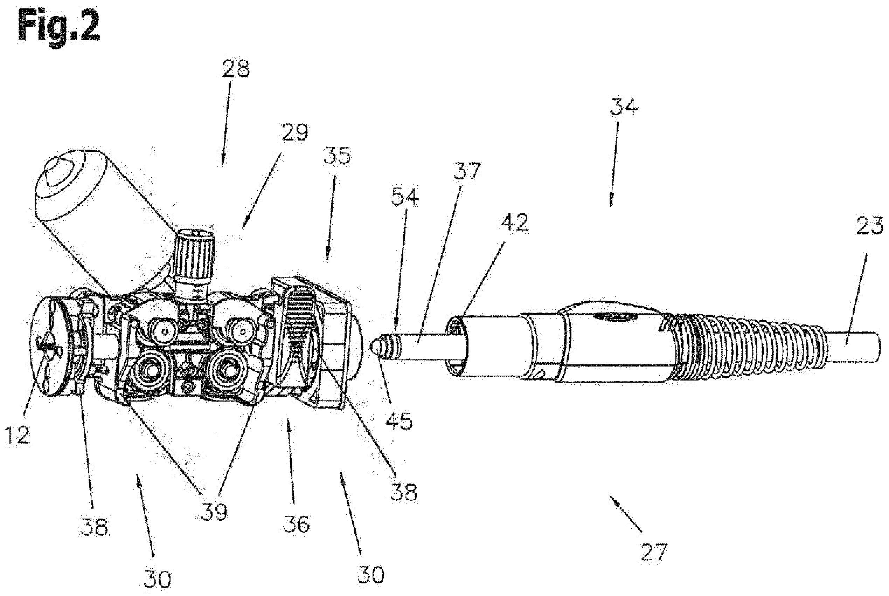

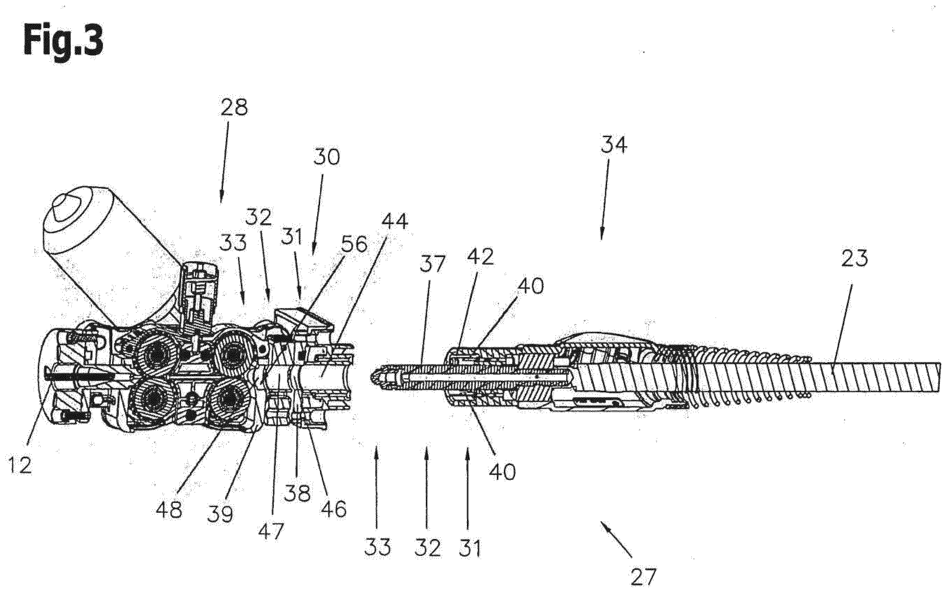

Das Anschlusssystem 27 ist nun aus der Zusammenschau der Fig. 2 bis 11 ersichtlich. Grundsätzlich hat das Anschlusssystem 27 die Aufgabe, die für einen Schweißprozess erforderlichen Medien wie den Schweißstrom, das Gas 8, Steuersignale 40, den Schweißdraht 13 und dergleichen dem Schweißbrenner 10 zur Verfügung zu stellen, wie allgemein aus dem Stand der Technik bekannt. Entsprechend ist beispielsweise für jedes dieser Medien eine Leitung im Schlauchpaket 23 vorgesehen. Ebenso ist für jedes Medium sowohl in der Kupplungsvorrichtung 24 als auch im Stecker 34 ein Anschluss vorgesehen.

Um allerdings diese Vielzahl der Medien Platz sparend über einen Stecker 34 zu übertragen, sind die Anschlüsse der Kupplungsvorrichtung 24 für den Stecker 34 gemäß der Erfindung in unterschiedliche Ebenen 31, 32, 33 aufgeteilt. Dazu sind entsprechend die Kupplung 35 und die Stromkupplung 36 erforderlich, welche fluchtend hintereinander angeordnet sind. Das heißt, dass der Übergang der unterschiedlichen Medien an unterschiedlichen Stellen - sprich den Ebenen 31, 32, 33 - erfolgt, wie insbesondere aus den Fig. 2 bis 4 ersichtlich.

Der Schweißdraht 13 wird hierbei im Wesentlichen direkt von der auf der Motorplatte 28 angeordneten Vorschubeinheit 29 auf den Stecker 34 übertragen. Es kann auch gesagt werden, dass der von der Vorschubeinheit 29 geförderte Schweißdraht 13 vom Stecker 34 aufgenommen wird, sodass dieser über das Schlauchpaket 23 zum Schweißbrenner 10 geführt werden kann. Dies ist erfindungsgemäß bereits dadurch gewährleistet, wenn ein Bolzen 37 des Steckers 34 in der Anschlussvorrichtung 30 positioniert wird. Wird das Anschlusssystem 27 für einen Handschweißbrenner eingesetzt, ist es im Wesentlichen erforderlich, auch die weiteren Medien zu übertragen.

Vorteilhaft sind daher die Kupplung 35 und die Stromkupplung 36 vorgesehen, welche an der Anschlussvorrichtung 30 der Motorplatte 28 angeordnet sind, sodass die weiteren Medien unmittelbar nach dem Schweißdraht 13 - in Richtung des Schweißbrenners 10 gesehen - auf den Stecker 34 übertragen werden können. Dazu weist die Anschlussvorrichtung 30 eine Stirnwand 38 und eine Trennwand 39 auf, wobei die Stromkupplung 36 zwischen Stirnwand 38 und Trennwand 39 angeordnet ist und die Kupplung 35 an der Stirnwand 38 befestigt ist. Somit ist die Stromkupplung 36 auf der Motorplatte 28 und die Kupplung 35 an der Motorplatte 28 befestigt.

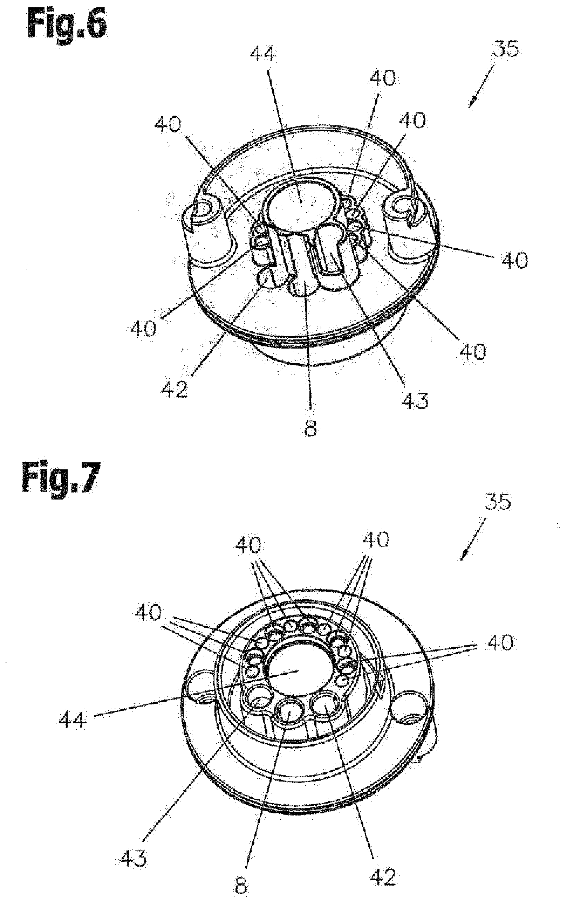

Die Kupplung 35 ist dabei bevorzugt aus einem elektrisch nicht leitenden Material wie Kunststoff gebildet und zur Übertragung folgender Medien ausgebildet: elf Steuersignale 40, das Gas 8, eine Luft 42 und einen Datenbus 43. Demzufolge weist die Kupplung 35 vierzehn Anschlüsse auf, welche im Kreis angeordnet sind, wie insbesondere aus den Fig. 6 und 7 ersichtlich. Dabei weisen die Anschlüsse für die Steuersignale 40 abwechselnd unterschiedliche Höhen auf, sodass die erforderlichen Luft- und Kriechstrecken auf engstem Raum eingehalten werden können. Zusätzlich weist die Kupplung 35 um den Mittelpunkt des Kreises eine Durchführung 44 auf, sodass die weiteren Medien hinter der Kupplung 35 - in Richtung der Vorschubeinheit 29 - auf den Stecker 34 übertragen werden können. Dies betrifft im Wesentlichen den Schweißstrom und den Schweißdraht 13. Somit bildet die Durchführung 44 eine Verbindung zur Anschlussvorrichtung 30, in welcher der Schweißstrom und der Schweißdraht 13 übertragen werden. Der Schweißstrom wird dabei von der Stromkupplung 36 über den Bolzen 37 auf den Stecker 34 übertragen, also unmittelbar hinter der Kupplung 35. Demzufolge wird aus Sicht in Richtung der Vorschubeinheit 29 der Schweißdraht 13 ganz hinten vom Stecker 34 aufgenommen - nämlich im Wesentlichen in der Trennwand 39 der Anschlussvorrichtung 30.

Somit kann gesagt werden, dass die vierzehn Anschlüsse der Kupplung 35 um einen Anschluss der Stromkupplung 36 und einen Anschluss zur Aufnahme des Schweißdrahts 13 ergänzt wird. Das heißt aber auch, dass drei Ebenen 31, 32, 33 für Anschlüsse gebildet werden, wobei die erste Ebene 31 durch die Kupplung 35, die zweite Ebene 32 durch die Stromkupplung 36 und die dritte Ebene 33 durch den Anschluss zur Aufnahme des Schweißdrahts 13 gebildet wird.

Der Anschluss zur Aufnahme des Schweißdrahts 13 ergibt sich dabei zum einen aus den Anordnungen von Kupplung 35, Stirnwand 38, Stromkupplung 36, Trennwand 39 und Vorschubeinheit 29 und zum anderen aus dem Stecker 34.

Der Stecker 34 muss demzufolge derart ausgebildet sein, dass die Medien über die auf drei Ebenen 31, 32, 33 aufgeteilten Anschlüsse der Kupplungsvorrichtung 24 auf die zu diesen Anschlüssen korrespondierenden Anschlüsse des Steckers 34 übertragen werden können - siehe insbesondere Fig. 2, 3 und 11. Dazu ist der Stecker 34 im Wesentlichen korrespondierend zur Kupplung 35 aufgebaut, wobei anstelle der Durchführung 44 der Kupplung 35 der Bolzen 37 am Stecker 34 angeordnet ist. Dieser Bolzen 37 stellt im Wesentlichen den am Stecker 34 korrespondierenden Anschluss für den Schweißstrom dar und bildet mit der an dessen freien Ende angeordneten Einlaufdüse 45 den Anschluss zur Aufnahme des Schweißdrahts 13.

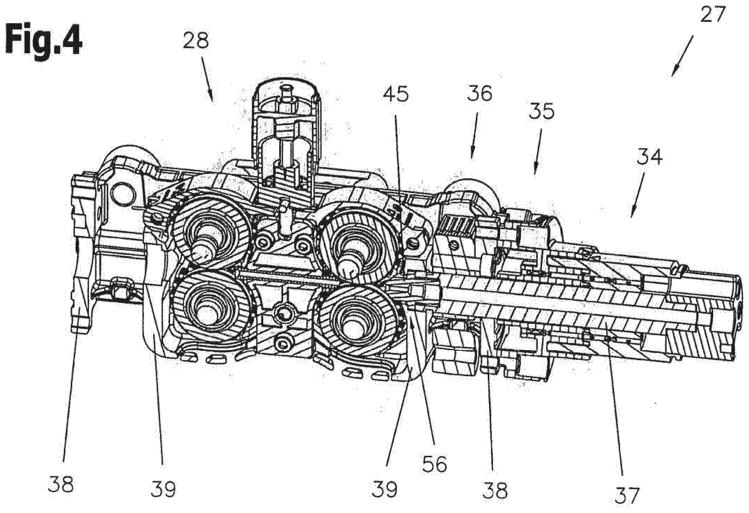

Das heißt, dass beim Verbinden des Anschlusssystems 27 in einem ersten Schritt der Bolzen 37 des Steckers 34 durch die Durchführung 44 der Kupplung 35, anschließend durch eine Ausnehmung 46 der Stirnwand 38 und in weiterer Folge durch eine Durchführung 47 der Stromkupplung 36 geführt ist. In diesem Status ist der Stecker 34 zentriert und durch den in der Kupplung 35, der Stirnwand 38 und der Stromkupplung 36 geführten Bolzen 37 gehalten, sodass der Stecker 34 in einfacher Weise in einem zweiten Schritt in die richtige Position gemäß einem Verdrehschutz gebracht werden kann. Der Verdrehschutz wird dabei bevorzugt durch die Anschlüsse der Luft 42, des Gases 8 und/oder des Datenbusses 43 gebildet, da diese im Vergleich zu den Steuersignalen 40 größer sind. Somit ist gewährleistet, dass keiner dieser drei Anschlüsse mit einem Steuersignal 40 verbunden wird. Diese Anschlüsse werden dementsprechend zuerst verbunden, also vor den Anschlüssen der Steuersignale 40. Somit können in einem dritten Schritt die Anschlüsse der Kupplung 35 mit den korrespondierenden Anschlüssen des Steckers 34 in der ersten Ebene 31 verbunden und gleichzeitig der Bolzen 37 in einer Ausnehmung 48 der Trennwand 39 positioniert und zentriert werden. Demzufolge ist in der Ausnehmung 48 der Trennwand 39 eine Art Anschlag 56 angeordnet, sodass lediglich ein Teil der Einlaufdüse 45 durch die Ausnehmung 48 ragt. Dadurch wird entsprechend auch der Abstand zwischen dem Austritt des Schweißdrahts 13 aus zwei Förderrollen der Vorschubeinheit 29 und der Einlaufdüse 45 auf ein Minimum reduziert bzw. können die Förderrollen unmittelbar vor der Einlaufdüse 45 angeordnet werden, sodass eine präzise Führung des Schweißdrahts 13 gewährleistet ist. Somit hat die Ausnehmung 48 zwei unterschiedliche Durchmesser, wobei im größeren Durchmesser der Bolzen 37 und im kleineren Durchmesser die Einlaufdüse 45 - welche sozusagen schwimmend im Bolzen 37 gelagert ist - zentriert wird. Somit ist auch durch die Länge des Bolzens 37 und dem Anschlag 56 definiert, wann die Anschlüsse der Medien korrekt verbunden sind. In diesem Status ist somit auch der Anschluss zur Aufnahme des Schweißdrahts 13 vollständig gebildet. Das heißt, dass die Aufnahme für den Schweißdraht 13 durch die in der Ausnehmung 48 der Trennwand 39 zentrierte Einlaufdüse 45 des Bolzens 37 fluchtend mit der Förderachse des Schweißdrahtes 13 ist, sodass der Schweißdraht 13 im Wesentlichen automatisch aufgenommen werden kann. Somit sind in diesem Status alle Anschlüsse verbunden, bis auf die vollständige Übertragung des Schweißstroms, wie insbesondere aus Fig. 4 ersichtlich. Hieraus ist entsprechend zu entnehmen, dass die Durchführungen 44, 47 der Kupplung 35 und der Stromkupplung 36 mit der Ausnehmungen 46, 48 der Stirnwand 38 und der Trennwand 39 fluchtend sind. Dadurch ist auch eine Mittelachse des Bolzens 37 mit der Förderachse des Schweißdrahts 13 fluchtend.

Allgemein weist der Bolzen 37 einen Durchmesser auf, mit welchem im Wesentlichen ein großer Bereich für den Schweißstrom übertragen werden kann. Somit kann der Bolzen 37 für fast alle Anwendungen verwendet werden. Zusätzlich muss der Durchmesser des Bolzens 37 auch dazu ausgelegt sein, dass das Gewicht des Steckelements 34 gehalten werden kann. Dies wird im Wesentlichen durch einen Durchmesser im Bereich um 17 mm erreicht. Beispielsweise beträgt der Durchmesser 17.31 mm.

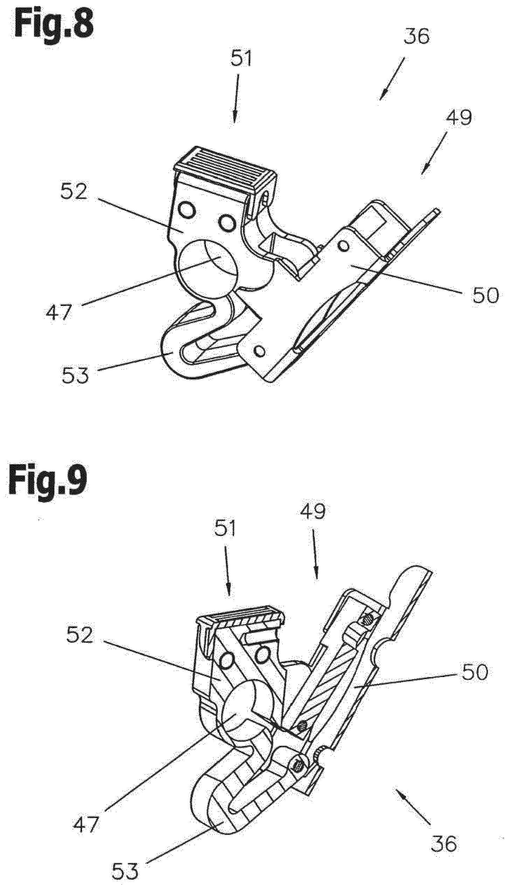

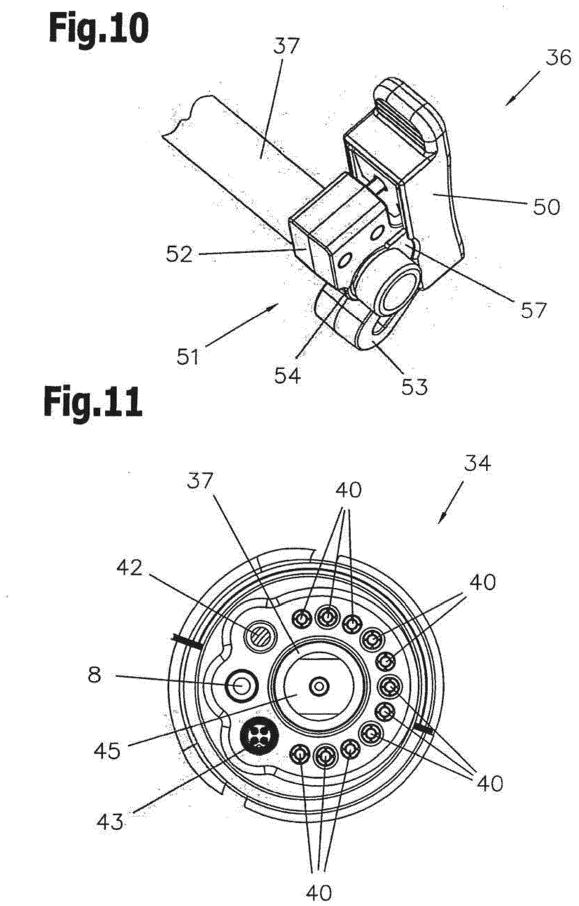

Die Übertragung des Schweißstroms erfolgt nun derart, dass die Stromkupplung 36 - wie insbesondere anhand der Fig. 8 bis 10 gezeigt - mit einem Verriegelungssystem 49 ausgebildet ist, welches beim Verbinden des Anschlusssystems 27 geöffnet sein muss. Das Verriegelungssystem 49 bewirkt beim Schließen, dass der Bolzen 37 im Wesentlichen vollständig umschlossen wird und mit einer definierten Kraft geklemmt wird, wie insbesondere in Fig. 10 dargestellt. Dazu weist das Verriegelungssystem 49 im Wesentlichen einen Hebel 50 auf, welcher bevorzugt mit einem Messingteil 51 der Stromkupplung 36 verbunden ist, wobei zumindest der Messingteil 51 elektrisch leitfähig ist. Der bevorzugt einteilige Messingteil 51 wird dabei sozusagen in einen starren Teil 52 und einen flexiblen Teil 53 unterteilt. Die Durchführung 47 für den Bolzen 37 ist dabei im Bereich des starren Teils 52 angeordnet. Des Weiteren verbindet der Hebel 50 auf einer Seite den flexiblen Teil 53 mit dem starren Teil 52, sodass bei einer Betätigung des Hebels 50 aufgrund einer exzentrischen Kraft der Durchmesser der Durchführung 47 verkleinert wird und der Bolzen 37 geklemmt wird. Der flexible Teil 53 wirkt zusätzlich auch als Feder, wodurch Toleranzunterschiede der Bolzen 37 ausgeglichen werden und der Todpunkt des Verriegelungssystems 49 überwunden werden kann. Somit kann der geschlossene Hebel 50 im Wesentlichen als Selbstsichernder Hebel 50 betrachtet werden. Durch den geschlossenen Hebel 50 ergibt sich auch eine Fläche, welche den Bolzen 37 einklemmt und über welche der Schweißstrom auf den Bolzen 37 übertragen wird. Entsprechend ist die Fläche auf die Höhe des Schweißstroms abgestimmt. Damit der Schweißstrom auf den Bolzen 37 übertragen werden kann, ist die Stromkupplung 36 innen an der Stirnwand 38 befestigt, wobei die Zuleitung für den Schweiß strom allgemein an der Motorplatte 28 angeschlossen ist. Somit wird der Schweißstrom von der Zuleitung über die Motorplatte 28 auf die Stromkupplung 36 übertragen, sodass schlussendlich der Schweißstrom auf den Bolzen 37 übertragen werden kann. Selbstverständlich ist es auch möglich, dass die Zuleitung für den Schweißstrom beispielsweise direkt an der Stromkupplung 36 angeschlossen wird. Durch eine derartige Befestigung der Stromkupplung 36 wird auch erreicht, dass die Durchführung 47 bei der Montage fluchtend ausgerichtet werden kann. Zusätzlich kann der Hebel 50 auch derart geformt sein, dass ein Teil des Hebels 50 - ein Gegenstück 57 - beim Schließen in einer Nut 54 des Bolzens 37 einrastet und diesen zusätzlich sichert, wie im Detail aus Fig. 10 ersichtlich.

Die Stromkupplung 36 wird also innen an der Stirnwand 38 befestigt, wobei die Befestigung bevorzugt über Schrauben erfolgt. Diese werden von außen - durch die Stirnwand 38 hindurch ― mit dem Gewinde im starren Teil 52 der Stromkupplung 36 verbunden. Somit ist kein Gewinde in der Stirnwand 38 vorgesehen, wodurch eine exakte Ausrichtung der Durchführung 47 gegeben ist.

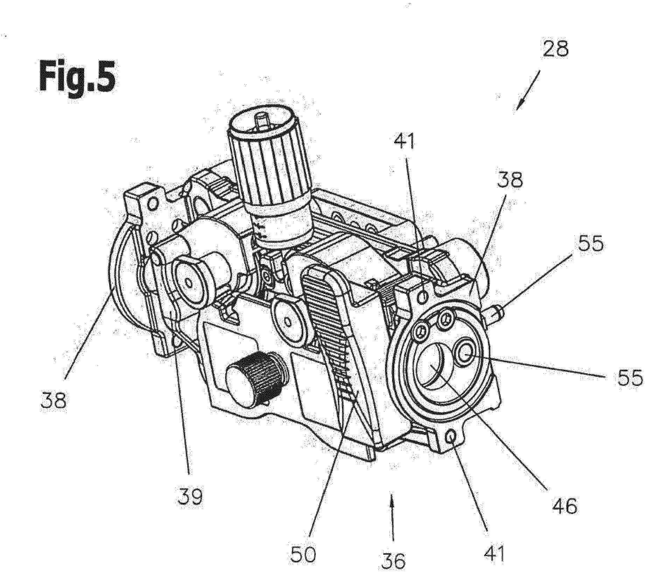

Nachdem also die Stromkupplung 36 montiert wurde, kann die Kupplung 35 außen an der Stirnwand 38 ― den so genannten Flansch ― montiert werden. Dabei werden die Schrauben ― die nicht bezeichneten Kreise auf der Stirnwand 38 in Fig. 5 - zur Befestigung der Stromkupplung 36 verdeckt. Wesentlich ist einerseits, dass die Befestigung der Kupplung 35 im Wesentlichen auf der Höhe der Mittelachse der Ausnehmung 46 erfolgt, indem beispielsweise links und rechts bzw. oben und unten (je nach Einbaulage der Motorplatte 28) der Ausnehmung 46 ein Befestigungselement 41 bzw. ein Gewinde 41 vorgesehen ist. Somit ist gewährleistet, dass das Gewicht des Steckers 34 über die Befestigung gehalten wird und die Beanspruchungen für die Kupplung 35 ― beispielsweise beim Entfernen des Steckers 34 ― minimal gehalten werden.

Auch ist die Durchführung 44 der Kupplung 35 als Führung für den Bolzen 37 des Steckers 34 ausgebildet, wobei diese elektrisch isolierend ist. Diese Führung weist im Wesentlichen eine Länge von einigen Zentimetern auf und bildet mit der Stärke der Stirnwand 38 die Distanz zwischen der ersten Ebene 31 und der zweiten Ebene 32. Neben der Führung hat diese Distanz auch den zweiten Effekt, dass die Anschlusszuleitungen für die Anschlüsse der Kupplung 35 (wie Steuersignale 40, Datenbus 43 und Luft 42) geführt werden können. Es ist aber auch möglich, dass die Durchführung 44 elektrisch leitfähig ausgebildet ist. Somit kann beispielsweise ein zusätzlicher Stromübergang in der Durchführung 44 erfolgen. Dazu kann gegebenenfalls eine Feder eingesetzt werden, welche den Bolzen 37 umschließt und den Strom auf diesen überträgt.

Zusätzlich kann in der Stirnwand 38 auch ein Gasversorgungsanschluss 55 vorgesehen sein, welcher bevorzugt fluchtend mit dem Anschluss für das Gas 8 der Kupplung 35 positioniert ist. Daher ist bei der Befestigung der Kupplung 35 der Gasanschluss 8 der Kupplung 35 automatisch mit dem Gasversorgungsanschluss 55 der Stirnwand 38 verbunden. Dieser Gasversorgungsanschluss 55 verläuft im Wesentlichen zur Unterseite der Grundplatte der Motorplatte 28, wo die Gaszuleitung und die Zuleitung für den Schweißstrom angeschlossen wird. In diesem Fall sind also für die Kupplung 35 vier Punkte von Bedeutung, nämlich die Ausnehmung 46 der Stirnwand 38, die zwei Gewinde 41 und der Gasversorgungsanschluss 55. Die Abstände dieser Punkte zueinander muss im Wesentlichen eingehalten werden, sodass die Medien über die Anschlussvorrichtung 30 zum Schweißbrenner 10 übertragen werden können. Die Abstände sind dabei im Wesentlichen auf eine Mediendurchführung eines Roboters ― wie beispielsweise einem so genannten Hohlwellenroboter - abgestimmt. Eine derartige Mediendurchführung hat einen Durchmesser im Bereich um 42 mm. Somit muss entsprechend der Außendurchmesser des Steckers 34 zumindest minimal unter diesem Bereich liegen. Erreicht wird dies, wie bereits angesprochen, durch die Aufteilung der Anschlüsse auf die unterschiedliche Ebenen 31, 32, 33. Aufgrund einer derartigen Mediendurchführung im Bereich um 42 mm ergeben sich folgende Abstände für die Befestigung der Kupplung 35:
Der Abstand vom Mittelpunkt des Gewindes 41 zum Mittelpunkt der Ausnehmung 46 der Stirnwand 38 beträgt im Wesentlichen 28 mm. Dabei sind die Gewinde 41 im Wesentlichen auf einer Senkrechten durch den Mittelpunkt der Ausnehmung 46 der Stirnwand 38 angeordnet. Der Abstand zwischen dem Mittelpunkt der Ausnehmung der Stirnwand 38 und dem Mittelpunkt des Gasversorgungsanschlusses 55 beträgt im Wesentlichen 14 mm. Dabei ist der Mittelpunkt des Gasversorgungsanschlusses 55 auf einer Waagrechten durch den Mittelpunkt der Ausnehmung 46 der Stirnwand 38 angeordnet. Diese Anordnung von Gewinde 41, Ausnehmung 46 und Gasversorgungsanschluss 55 ist im Wesentlichen aus Fig. 5 ersichtlich, wobei dies die übliche Einbaulage der Motorplatte 28 ist. Da hier die Motorplatte 28 sozusagen stehend dargestellt ist, ergibt sich die Senkrechte bzw. die Waagrechte wie zuvor beschrieben. Wird entsprechend die Motorplatte 28 liegend eingebaut, ist die Senkrechte bzw. die Waagrechte zu vertauschen.

Das offenbarte Anschlusssystem 27 ist somit im Wesentlichen aufgrund des runden Steckers 34 für einen Hohlwellenroboter geeignet, wobei sämtliche zwingend erforderliche Medien und zusätzliche Medien über den einzigen Stecker 34 zum Schweißbrenner 10 übertragen werden. Ein zusätzliches Medium ist beispielsweise die Luft 42, welche zum so genannten Ausblasen verwendet werden kann. Ein weiteres zusätzliches Medium kann auch über eine der Steuerleitungen 40 übertragen werden, wie das Suchen einer Gasdüsenposition.

Für eine im Wesentlichen verlustfreie Übertragung der Medien ist es von Bedeutung, dass das Anschlusssystem 27 vollständig verbunden ist. Dies wird im Wesentlichen dadurch kontrolliert, ob der Hebel 50 des Verriegelungssystems 49 geschlossen werden kann. Das heißt, wenn sich der Hebel 50 schließen lässt, ist das Anschlusssystem 27 vollständig geschlossen und betriebsbereit. Lässt sich der Hebel 50 demnach nicht vollständig schließen, ist der Stecker 34 nicht korrekt positioniert. Diese Kontrolle ergibt sich aus der Nut 54 im Bolzen 37 und einem entsprechenden Gegenstück 57 des Hebels 50, welches in der Nut 54 versenkt wird (Fig. 10). Somit wird der Bolzen 37 zum einen in der Durchführung 47 der Stromkupplung 36 eingeklemmt und andererseits auch über die Nut 54 fixiert, sodass im Wesentlichen eine doppelte Sicherung gegen eine Änderung der Position des Steckers 34 gegeben ist. Entsprechend erfolgen dabei die Klemmung und die Sicherung über die Nut 54 gemeinsam mit dem Hebel 50.

Dadurch ist aber auch gewährleistet, dass die Einlaufdüse 45 bzw. der Bolzen 37 in der Trennwand 39 korrekt positioniert und zentriert ist. Somit kann der Schweißdraht 13 reibungsarm von der Einlaufdüse 45 aufgenommen werden. Der Anschlag 56 in der Trennwand 39 hat hierbei auch die Aufgabe, eine spürbare Endposition des Steckers 34 darzustellen und die weiteren Anschlüsse vor einer Überbelastung zu schützen.

Eine vollständige Verbindung des Anschlusssystems 27 ist auch für den Datenbus 43 von Bedeutung, da dieser als so genannter High-Speed-Datenbus 43 ausgebildet ist. Dazu ist eine entsprechende Schirmung in der Steckverbindung erforderlich, da in unmittelbarer Nähe der Bolzen 37, welcher einen Schweißstrom von beispielsweise 500A führt, angeordnet ist. Der Übergang von einem High-Speed-Kabel des Datenbusses 43 auf die Steckverbindung erfolgt dabei in der Distanz zwischen der ersten Ebene 31 und der zweiten Ebene 32.

Das Anschlusssystem 27 bzw. der Hebel 50 lässt sich demnach nur dann vollständig schließen, wenn der Stecker 34 bis zum Anschlag 56 in der Trennwand 39 der Anschlussvorrichtung 30 geschoben wird oder die Einlaufdüse 45 in der Durchführung 47 der Stromkupplung 36 endet. Sollte letzteres der Fall sein, wird lediglich der Schweißstrom übertragen und es ist für den Schweißer ersichtlich, dass der Stecker 34 weiter hinein geschoben werden muss.

Selbstverständlich kann ein vollständig verbundenes Anschlusssystem 27 auch beispielsweise dadurch erkannt werden, indem ein Steuersignal 40 der Kupplung 35 erst dann mit dem korrespondierenden Anschluss des Steckers 34 kontaktiert wird, wenn der Stecker 34 bis zum Anschlag 56 eingeschoben ist. Entsprechend kann auch beispielsweise ein Kontakt in der Kupplung 35 mit dem Stecker 34 geschlossen werden oder ein Schalter in der Kupplung 35 betätigt werden, sodass kein Steuersignal 40 erforderlich ist.

Allgemein ist die Motorplatte 28 auch derart ausgebildet, dass die Anschlussvorrichtung 30 beidseitig angeordnet ist. Demzufolge also vor und nach der Vorschubeinheit 29, sodass ein symmetrischer Aufbau der Motorplatte 28 gegeben ist. Somit kann die Motorplatte 28 auch in einem so genannten Zwischenantrieb eingesetzt werden, durch welchen das Schlauchpaket 23 im Wesentlichen unterbrochen wird. Das Anschlusssystem 27 ist allerdings überall gleich und somit einheitlich.

Das Anschlusssystem 27 ist durch die Anschlussvorrichtung 30 der Motorplatte 28 auch äußerst flexibel einsetzbar. So kann beispielsweise ein so genannter Maschinenbrenner für Roboter direkt an der Anschlussvorrichtung 30 angeschlossen werden, ohne dass eine Kupplung 35 erforderlich ist. Dies ist darauf zurückzuführen, dass ein derartiger Maschinenbrenner lediglich eine begrenzte Anzahl von Medien benötigt. Meist nur den Schweißstrom, das Gas 8 und den Schweißdraht 13. Diese Medien können über die Anschlussvorrichtung 30 und die Stromkupplung 36 auf den Stecker 34 übertragen werden. Hierzu kann beispielsweise entweder ein verkürzter Bolzen 37, sodass der Gasanschluss 8 des Steckers 34 direkt mit dem Gasversorgungsanschluss 55 verbindbar ist, oder ein Zwischenstück zwischen dem Gasanschluss 8 des Steckers 34 und dem Gasversorgungsanschluss 55, eingesetzt werden. Gegebenenfalls kann auch die Stromkupplung 36 weggelassen werden, sodass die Medien ausschließlich über die Anschlussvorrichtung 30 übertragen werden. Dazu sind beispielsweise in den Ausnehmungen 46 der Stirnwand 38 und der Trennwand 39 Federn integriert, welche den Schweißstrom auf den Bolzen 37 übertragen. Diese Federn können entsprechend auch in jeder Ausführungsform des Anschlusssystems 27 eingesetzt werden, beispielsweise auch in der Durchführung 47 der Stromkupplung 36.

Das Anschlusssystem 27 kann aber auch derart ausgebildet sein, dass das Steckelement 34 bzw. die Kupplung 35 durch einen Adapter gebildet ist. Dabei wird entsprechend das Schlauchpaket 23 am Adapter angeschlossen. Die Form des Adapters entspricht dabei im Wesentlichen entweder der Form des Steckelements 34 bzw. des Steckers 34 oder einer Kombination zwischen Stecker 34 und Kupplung 35. Auf jeden Fall benötigt der Adapter den Bolzen 37, welcher entsprechend in der Anschlussvorrichtung 30 positioniert wird. So ist beispielsweise bei der Kombination von Stecker 34 und Kupplung 35 als Adapter der Bolzen 37 im Wesentlichen an der Kupplung 35 befestigt, welche entsprechend auch an der Stirnwand 38 befestigt wird. Dabei stellt der Bolzen 37 die Verbindung zwischen Kupplung 35 und Anschlussvorrichtung 30 dar. Entspricht hingegen der Adapter dem Stecker 34, so wird im Wesentlichen der Adapter anstelle des Steckers 34 mit der Kupplung 35, der Anschlussvorrichtung 30 und der Stromkupplung 36 verbunden.

Dadurch kann jeweils das Schlauchpaket 23 am Adapter befestigt werden. Die weiteren Medien können entsprechend über eine eigene Schnittstelle und/oder aber auch über den Adapter übertragen werden. Die Schnittstelle ist dabei meist neben dem Adapter angeordnet. Somit könnten an der Anschlussvorrichtung 30 auch Schlauchpakete 23 angeschlossen werden, welche nicht mit dem erfindungsgemäßen Stecker 34 versehen sind.

Grundsätzlich kann also gesagt werden, dass das Steckelement 34 mit dem Schlauchpaket 23 verbunden ist. Diese Verbindung zwischen dem Steckelement 34 und dem Schlauchpaket 23 stellt einen Übergang dar, welcher allerdings unterschiedlich ausgebildet sein kann:
Zum Einen, dass das Steckelement 34 ― wie im Ausführungsbeispiel beschrieben ― an einem Ende des Schlauchpakets 23 befestigt ist.

Zum Zweiten, dass das Steckelement 34 ein Adapter ist, welcher aus der Kupplung 35 und dem Bolzen 37 gebildet wird. In diesem Fall muss anstelle des Steckelements 34 ein Anschlusselement am Ende des Schlauchpakets 23 befestigt sein, welches das Schlauchpaket 23 mit der Kupplung 35 verbindet. Somit ist das Schlauchpaket 23 über das Anschlusselement mit dem Steckelement 34 bzw. dem Adapter verbunden.

Dies ist auch der Fall, wenn der Adapter dem Steckelement 34 entspricht.

Der Ordnung halber sei abschließend darauf hingewiesen, dass zum besseren Verständnis des Aufbaus der erfindungsgemäßen Gegenstände diese bzw. deren Bestandteile teilweise unmaßstäblich und/oder vergrößert und/oder verkleinert dargestellt wurden.

### Bezugszeichenaufstellung

| | | | |
|---|---|---|---|
| 1 | Schweißgerät | 41 | Gewinde |
| 2 | Stromquelle | 42 | Luft |
| 3 | Leistungsteil | 43 | Datenbus |
| 4 | Steuervorrichtung | 44 | Durchführung |
| 5 | Umschaltglied | 45 | Einlaufdüse |
| 6 | Steuerventil | 46 | Ausnehmung |
| 7 | Versorgungsleitung | 47 | Durchführung |
| 8 | Gas | 48 | Ausnehmung |
| 9 | Gasspeicher | 49 | Verriegelungssystem |
| 10 | Schweißbrenner | 50 | Hebel |
| 11 | Drahtvorschubgerät | 51 | Messingteil |
| 12 | Versorgungsleitung | 52 | Messingteil starr |
| 13 | Schweißdraht | 53 | Messingteil flexibel |
| 14 | Vorratstrommel | 54 | Nut |
| 15 | Lichtbogen | 55 | Gasversorgungsanschluss |
| 16 | Werkstück | 56 | Anschlag |
| 17 | Schweißleitung | 57 | Gegenstück |
| 18 | Scheißleitung | | |
| 19 | Kühlkreislauf | | |
| 20 | Strömungswächter | | |
| 21 | Wasserbehälter | | |
| 22 | Ein- und/oder Ausgabevorrichtung | | |
| 23 | Schlauchpaket | | |
| 24 | Kupplungsvorrichtung | | |
| 25 | Zugentlastungsvorrichtung | | |
| 26 | Gehäuse | | |
| 27 | Anschlusssystem | | |
| 28 | Motorplatte | | |
| 29 | Vorschubeinheit | | |
| 30 | Anschlussvorrichtung | | |
| 31 | erste Ebene | | |
| 32 | zweite Ebene | | |
| 33 | dritte Ebene | | |
| 34 | Steckelement | | |
| 35 | Kupplung | | |
| 36 | Stromkupplung | | |
| 37 | Bolzen | | |
| 38 | Stirnwand | | |
| 39 | Trennwand | | |
| 40 | Steuersignale | | |

## Patentansprüche

1. Steckelement (34) für ein Anschlusssystem (27) eines Schweißbrenners (10), welcher über zumindest ein Schlauchpaket (23) mit dem Anschlusssystem (27) verbunden ist, wobei über das Schlauchpaket (23) ein von einer auf einer Motorplatte (28) angeordneten Vorschubeinheit (29) geförderter Schweißdraht (13) und Gas zum Schweißbrenner (10) geführt sind, wobei das Steckelement (34) zumindest mit einem Bolzen (37) versehen ist, an dessen freiem Ende eine Einlaufdüse (45) für einen Schweißdraht (13) angeordnet ist, wobei zumindest der Bolzen (37) zur Befestigung an einer durch einen Endbereich der Motorplatte (28) gebildeten Anschlussvorrichtung (30) ausgebildet ist,
**dadurch gekennzeichnet, dass**
- das Steckelement (34) einen Anschluss aufweist, der auf einem Kreis rund um den Bolzen (37) in einer ersten Ebene (31) angeordnet ist und zur Übertragung von dem Gas (8) als zwingend erforderliches Medium ausgebildet ist, und dreizehn zusätzliche Anschlüsse auf diesem Kreis zur Übertragung zusätzlicher Medien zusätzlich zum Gas, nämlich elf Steuersignale (40), eine Luft (42) und ein Datenbus (43) angeordnet sind,
- der Bolzen (37) einen Bereich zur Übertragung eines Schweißstroms als zwingend erforderliches Medium in einer zweiten Ebene (32) aufweist,
- die Einlaufdüse (45) für den Schweißdraht (13) als zwingend erforderliches Medium in einer dritten Ebene (33) angeordnet ist und
- der Bolzen (37) zwischen der ersten Ebene (31) und der dritten Ebene (33) eine Nut (54) für ein Verriegelungssystem (49) einer Stromkupplung (36) aufweist.

## Claims

1. A plug element (34) for a connection system (27) of a welding torch (10), which is connected to the connection system (27) via at least one hose package (23), wherein a welding wire (13) conveyed by a feed unit (29) arranged on a motor plate (28) and gas are guided to the welding torch (10) via the hose package (23), wherein the plug-in element (34) is provided at least with a bolt (37), at the free end of which an inlet nozzle (45) for a welding wire (13) is arranged, wherein at least the bolt (37) is designed for fastening to a connecting device (30) formed by an end region of the motor plate (28), **characterized in that**
- the plug element (34) has a connection arranged on a circle around the bolt (37) in a first plane (31) and formed for transmission of the gas (8) as an obligatorily required medium, and thirteen additional connections are arranged on this circle for transmission of additional media in addition to the gas, namely eleven control signals (40), an air (42) and a data bus (43),
- the bolt (37) has an area for transmitting a welding current as an obligatorily required medium in a second plane (32),
- the inlet nozzle (45) for the welding wire (13) as an obligatorily required medium is arranged in a third plane (33), and
- the bolt (37) has a groove (54) for a locking system (49) of a current coupling (36) between the first plane (31) and the third plane (33).

## Revendications

1. Élément enfichable (34) pour un système de raccordement (27) d'un chalumeau (10), qui est relié par l'intermédiaire d'au moins un ensemble de tuyaux (23) avec le système de raccordement (27), dans lequel l'ensemble de tuyaux (23) permet de guider un fil de soudure (13) convoyé par une unité d'avance (29) disposée sur une plaque de moteur (28) et un gaz vers le chalumeau (10), dans lequel l'élément enfichable (34) est muni d'au moins une tige (37) l'extrémité libre de laquelle est disposée une buse d'entrée (45) pour un fil de soudure (13), dans lequel au moins la tige (37) est conçu pour être fixée à un dispositif de raccordement (30) constitué par une partie d'extrémité de la plaque de moteur (28),
**caractérisé en ce que**
- l'élément enfichable (34) comprend un raccord qui est disposé sur un cercle autour de la tige (37) dans un premier niveau (31) et qui est conçu pour la transmission du gaz (8) en tant que fluide absolument nécessaire, et treize raccords supplémentaires sur ce cercle pour la transmission de supports supplémentaires en plus du gaz, à savoir onze signaux de commande (40) de l'air (42) et un bus de données (43),
- la tige (37) comprend une partie pour la transmission d'un courant de soudure en tant que moyen absolument nécessaire dans un deuxième niveau (32),
- la buse d'entrée (45) pour le fil de soudure (13) est disposée, en tant que moyen absolument nécessaire, dans un troisième niveau (33) et
- la tige (37) comprend, entre le premier niveau (31) et le troisième niveau (33), une rainure (54) pour un système de verrouillage (49) d'un couplage de courant (36).
